# EUROPEAN PATENT APPLICATION

(11) **EP 4 160 044 A1**
(43) Date of publication of application: **05.04.2023**
(21) Application number: 21811951.9
(22) Date of filing: 17.05.2021
(51) Int. Cl.: F16F 9/02, F16F 9/36, F16F 9/32, B60G 15/12

(54) **AIR SPRING ASSEMBLY**

(30) Priority: 25.05.2020 CN 202010450562
(71) Applicant: China Faw Co., Ltd., Changchun, Jilin 130011 (CN)
(72) Inventor: LI, Yaochao, Changchun, Jilin 130011 (CN); LI, Junwei, Changchun, Jilin 130011 (CN); ZHANG, Yang, Changchun, Jilin 130011 (CN); ZHENG, Wenbo, Changchun, Jilin 130011 (CN); SHAN, Shuai, Changchun, Jilin 130011 (CN)
(74) Representative: Hahner, Ralph
(86) International application number: PCT/CN2021/094164
(87) International publication number: WO 2021/238707

(57) **Abstract**

Disclosed is an air spring assembly, comprising a housing, a piston rod (2) and an upper suspension. One end of the piston rod (2) penetrates the housing and is connected with the upper suspension, a sealing assembly is sleeved on the piston rod (2), the sealing assembly is sandwiched between the upper suspension and an outer wall of the housing, such that the upper suspension is not always in contact with compressed air inside the housing in an axial movement process of the piston rod (2); and a mounting cavity (111) is provided, in a recessed manner, in the outer wall of the housing, and the upper suspension and the sealing assembly are arranged in the mounting cavity (111).

## Description

### Cross-Reference to Related Application

This invention is based upon and claims priority to Chinese Patent Application No. 202010450562.1, filed on May 25, 2020, the invention of which is hereby incorporated by reference in its entirety.

### Technical Field

This invention relates to the field of vehicles, for example, to an air spring assembly.

### Background

For an air spring assembly that is integrated by an air spring and a shock absorber, a connection position between an upper suspension and a piston rod of the air spring assembly is required to be sealed. Currently, there are the following two methods to resolve the above technical problem.

The first method is to use a pressure-bearing upper suspension. The upper suspension includes an upper suspension body made of rubber. The upper suspension body having sealing performance is used as a part of a sealing assembly of an air spring structure, that is, the sealing assembly includes two sealing rings and the upper suspension body. However, during an operation of a vehicle, the upper suspension always bears internal pressure of the air spring, which largely affects the durability of the upper suspension, resulting in relatively large rigidity of the upper suspension. As a result, the rigidity of the upper suspension body made of rubber is generally increased, but this is difficult to ensure that the dynamic rigidity and static rigidity of the upper suspension meet requirements, resulting in reduction of comfort of the vehicle.

The second method is to completely wrap the upper suspension in the air spring assembly, so that the upper suspension body does not bear a pressure difference, and the upper suspension has a desirable stress condition. Therefore, the durability, dynamic rigidity and static rigidity of the upper suspension can be well guaranteed. However, since the air spring assembly needs to wrap the upper suspension, space occupation of the entire air spring assembly is increased, which is difficult to meet the requirements for a car model of which arrangement space is relatively limited.

### Summary

This invention provides an air spring assembly, to ensure that space occupation of the entire air spring assembly meets requirements while the durability, dynamic rigidity and static rigidity of an upper suspension meet the requirements.

An embodiment provides an air spring assembly, including a housing, a piston rod, and an upper suspension. An end of the piston rod penetrates the housing and is connected with the upper suspension. A sealing assembly is sleeved on the piston rod, and is sandwiched between the upper suspension and an outer wall of the housing, to cause the upper suspension to not be always in contact with compressed air inside the housing during an axial movement of the piston rod.

A mounting cavity is provided, in a recessed manner, in the outer wall of the housing, and the upper suspension and the sealing assembly are arranged in the mounting cavity.

In some embodiments, the sealing assembly includes a sealing diaphragm, a sleeve, and a pressing block which are sleeved outside the piston rod. The upper suspension abuts against the pressing block, to cause an outer edge of the sealing diaphragm to be sandwiched between the pressing block and the outer wall of the housing. The upper suspension makes the sleeve to abut against an outer wall of the piston rod, to make an inner edge of the sealing diaphragm to be sandwiched between an inner wall of the sleeve and the outer wall of the piston rod.

In some embodiments, the outer wall of the piston rod is provided with a first step surface, and the sleeve is sandwiched between the upper suspension and the first step surface.

In some embodiments, the sealing assembly further includes an outer casing pipe in interference fit with the mounting cavity, and an end of the outer casing pipe abuts against the pressing block.

In some embodiments, a first anti-dropping protrusion is protruded from at least one side on the outer edge of the sealing diaphragm. A first positioning hole in inserting connection with the first anti-dropping protrusion is provided in a position of at least one of the pressing block and the outer wall of the housing directly facing the first anti-dropping protrusion.

In some embodiments, a second anti-dropping protrusion is protruded from at least one side on the inner edge of the sealing diaphragm; and a second positioning hole in inserting connection with the second anti-dropping protrusion is provided in a position of at least one of the sleeve and the outer wall of the piston rod directly facing the second anti-dropping protrusion.

In some embodiments, the sealing assembly further includes a limit plate and a locking nut; the limit plate is fixedly arranged at an opening of the mounting cavity, to limit the upper suspension between the limit plate and the pressing block; the locking nut is threadedly connected with the piston rod, and the upper suspension is sandwiched between the sleeve and the locking nut.

In some embodiments, the piston rod is movable axially. The sealing diaphragm is a structure that is formed by using an omega-shaped structure as a cross section to rotate 360° around a central axis of the sealing diaphragm.

In some embodiments, the air spring assembly further includes at least one of the following characteristics:
a smooth transition connection is achieved between the sealing diaphragm and the pressing block;
or a smooth transition connection is achieved between the sealing diaphragm and the sleeve.

In some embodiments, the housing comprises a first housing and a second housing in sealing connection with the first housing to form a compression chamber. The mounting cavity is formed, in the recessed manner, in an outer wall of the first housing.

### Brief Description of the Drawings

Fig. 1 is a schematic diagram of a local structure of an air spring assembly according to an embodiment of this invention.
Fig. 2 is a schematic structural diagram of a sealing diaphragm according to an embodiment of this invention.

In the drawings:
11. First housing; 111. Mounting cavity; 12. Second housing; 13. Compression chamber;
2. Piston rod;
31. Inner core; 32. Rubber block;
41. Sealing diaphragm; 411. First anti-dropping protrusion; 412. Second anti-dropping protrusion; 42. Pressing block; 43. Sleeve; 44. Outer casing pipe; 45. Locking nut; 46. Limit plate.

### Detailed Description of the Embodiments

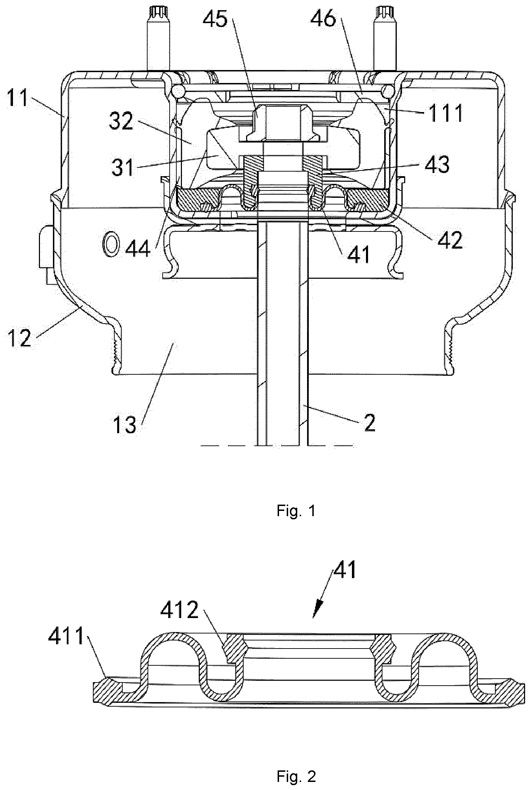

As shown in Fig. 1 and Fig. 2, this embodiment provides an air spring assembly, including a housing, a piston rod 2, and an upper suspension. The housing includes a first housing 11 and a second housing 12 in sealing connection with the first housing 11 to form a compression chamber 13. The compression chamber 13 is filled with compressed air.

An end of the piston rod 2 penetrates the housing and is connected with the upper suspension. A sealing assembly is sleeved on the piston rod 2, and is sandwiched between the upper suspension and an outer wall of the housing, to make the upper suspension to not be always in contact with the compressed air inside the housing during an axial movement of the piston rod 2. In this embodiment, a mounting cavity 111 is provided, in a recessed manner, in the outer wall of the first housing 11, and the upper suspension and the sealing assembly are arranged in the mounting cavity 111.

In this embodiment, the upper suspension is arranged outside the housing. By using the sealing assembly, the upper suspension is always not in contact with the compressed air inside the housing during the axial movement of the piston rod 2. In this way, not only the durability of the upper suspension is guaranteed, but also the dynamic rigidity and static rigidity of the upper suspension are reduced to a certain extent. In addition, a space occupation of the air spring assembly is reduced as much as possible by arranging the upper suspension and the sealing assembly in the mounting cavity 111 formed in the outer wall of the housing in the recessed manner.

In some embodiments, the sealing assembly includes a sealing diaphragm 41, a sleeve 43, and a pressing block 42 which are sleeved outside the piston rod 2. First anti-dropping protrusions 411 are protruded from both sides on the outer edge of the sealing diaphragm 41. First positioning holes in inserting connection with the corresponding first anti-dropping protrusion 411 are provided in positions of the pressing block 42 and the outer wall of the housing directly facing the first anti-dropping protrusions 411. By using the first anti-dropping protrusions 411 and the first positioning holes for positioning, assembly positioning between the sealing diaphragm 41 and the pressing block 42 or the housing is guaranteed, and the outer edge of the sealing diaphragm 41 is prevented from separating from the pressing block 42 and the outer wall of the housing. In other embodiments, the first anti-dropping protrusion 411 may only be arranged on one side of the outer edge, but a sealing effect between the pressing block 42 and the outer wall of the housing is reduced accordingly.

Optionally, the first anti-dropping protrusion 411 is a triangular structure. Through such a mode, desirable contact between the sealing diaphragm 41 and the pressing block 42, between the sealing diaphragm 41 and the outer wall of the housing may be guaranteed, so that the sealing effect between the pressing block 42 and the outer wall of the housing is guaranteed.

In this embodiment, the outer wall of the piston rod 2 is provided with a first step surface. An inner hole of the sleeve 43 is a step hole. A second step surface is formed between a large diameter hole and a small diameter hole of the step hole. An end of the sleeve 43 abuts against the upper suspension to make the first step surface to abut against the second step surface. An inner edge of the sealing diaphragm 41 is sandwiched between the large diameter hole and the outer wall of the piston rod 2.

In some embodiments, second anti-dropping protrusions 412 are protruded from both sides on the inner edge of the sealing diaphragm 41. Second positioning holes in inserting connection with the corresponding second anti-dropping protrusions 412 are provided in positions of the sleeve 43 and the outer wall of the piston rod 2 directly facing the second anti-dropping protrusions 412. By using the second anti-dropping protrusions 412 and the second positioning holes for positioning, assembly positioning between the sealing diaphragm 41 and the piston rod 2 or the sleeve 43 is guaranteed, and the inner edge of the sealing diaphragm 41 is prevented from separating from the sleeve 43 and the piston rod 2. In other embodiments, the second anti-dropping protrusion 412 may alternatively only be arranged on one side of the inner edge, but a sealing effect between the sleeve 43 and the piston rod 2 is reduced accordingly.

Optionally, the second anti-dropping protrusion 412 is a triangular structure. Through such a mode, desirable contact between the sealing diaphragm 41 and the sleeve 43 or the piston rod 2 may be guaranteed, so that the sealing effect between the sleeve 43 and the piston rod 2 is guaranteed.

The upper suspension abuts against the pressing block 42, to cause the outer edge of the sealing diaphragm 41 to be sandwiched between the pressing block 42 and the outer wall of the housing. The upper suspension causes the sleeve 43 to abut against the outer wall of the piston rod 2, and makes the inner edge of the sealing diaphragm 41 to be sandwiched between an inner wall of the sleeve 43 and the outer wall of the piston rod 2.

Optionally, the sealing assembly further includes a limit plate 46 and a locking nut 45. The limit plate 46 is fixedly arranged at an opening of the mounting cavity 111, to limit the upper suspension between the limit plate 46 and the pressing block 42. The locking nut 45 is threadedly connected with the piston rod 2. The upper suspension is sandwiched between the sleeve 43 and the locking nut 45.

In this embodiment, the upper suspension is mainly configured to achieve shock absorption, and includes an inner core 31 and a rubber block 32 provided outside the inner core 31 in a sleeving manner. The rubber block 32 and the inner core 31 are formed into an integrated structure through vulcanization. The rubber block 32 is in interference fit with an inner wall of the mounting cavity 111. In some embodiments, a positioning tab is protruded from an outer peripheral wall of the rubber block 32. A groove in interference fit with the positioning tab is recessed in an inner peripheral wall of the mounting cavity 111.

In some embodiments, the sealing assembly further includes an outer casing pipe 44 sleeved outside the rubber block 32. The outer casing pipe 44 is in interference fit with the inner peripheral wall of the mounting cavity 111. A first end of the outer casing pipe 44 abuts against the pressing block 42, and a second end of the outer casing pipe 44 abuts against the positioning tab of the rubber block 32. The rubber block 32, the outer casing pipe 44, the pressing block 42, and an inner bottom wall of the mounting cavity 111 successively abut with each other, so that the outer edge of the sealing diaphragm 41 is sandwiched between the pressing block 42 and the inner bottom wall of the mounting cavity 111.

In some embodiments, the piston rod 2 is movable axially. In order to provide enough movable space for the axial movement of the piston rod 2, in this embodiment, the sealing diaphragm 41 is a structure that is formed by using an omega-shaped structure as a cross section to rotate 360° around a central axis of the sealing diaphragm. During the axial movement of the piston rod 2, the sleeve 43, the inner core 31, and the locking nut 45 are synchronously moved with the piston rod 2. A shape of the sealing diaphragm 41 is changed with the pulling or pushing of the piston rod 2, and the rubber block 32 is deformed accordingly. In addition, the inner edge of the sealing diaphragm 41 is sandwiched between the sleeve 43 and the outer wall of the piston rod 2, and the outer edge of the sealing diaphragm 41 is sandwiched between the pressing block 42 and the outer wall of the housing. Therefore, the upper suspension can be guaranteed to not be in contact with the compressed air inside the housing.

In some embodiments, a smooth transition connection is achieved between the sealing diaphragm 41 and the pressing block 42, and a smooth transition connection is achieved between the sealing diaphragm 41 and the sleeve 43. Through the arrangement to limit the deformation of the sealing diaphragm 41, the sealing diaphragm 41 is prevented from breaking due to stress concentration caused by excessive curvature.

In an embodiment, the smooth transition connection may only be achieved between the sealing diaphragm 41 and the pressing block 42, or the smooth transition connection may only be achieved between the sealing diaphragm 41 and the sleeve 43.

In some embodiments, the smooth transition connection is achieved between the pressing block 42 and the housing, to cause the pressing block 42 to be tightly attached to the housing, so that the stability of the pressing block 42 is guaranteed.

In this invention, the upper suspension is arranged outside the housing. By using the sealing assembly, the upper suspension is always not in contact with the compressed air inside the housing during the axial movement of the piston rod 2. In this way, not only the durability of the upper suspension can be guaranteed, but also the dynamic rigidity and static rigidity of the upper suspension can be reduced to a certain extent. In addition, the space occupation of the air spring assembly is reduced as much as possible by arranging the upper suspension and the sealing assembly in the mounting cavity 111 formed in the outer wall of the housing in the recessed manner.

In the description of this invention, it is to be noted that, terms such as "center", "up", "down", "left", "right", "vertical", "horizontal", "inside", "outside", and the like are orientation or position relationships shown in the drawings, are adopted not to indicate or imply that indicated apparatuses or components must be in specific orientations or structured and operated in specific orientations but only to conveniently describe this invention and simplify descriptions, and thus should not be construed as limits to this invention. In addition, terms "first" and "second" are used for description only and should not be construed to indicate or imply relative importance. Terms "first position" and "second position" are two different positions.

In the description of this invention, it is to be noted that, unless otherwise clearly specified and limited, the terms "mounted", "connected" and "connect" should be interpreted broadly. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two elements. For those of ordinary skill in the art, specific meanings of the above mentioned terms in this invention may be understood according to a specific condition.

## Claims

1. An air spring assembly, comprising a housing, a piston rod (2), and an upper suspension, wherein an end of the piston rod (2) penetrates the housing and is connected with the upper suspension; a sealing assembly is sleeved on the piston rod (2), and is sandwiched between the upper suspension and an outer wall of the housing, to cause the upper suspension to not be always in contact with compressed air inside the housing during an axial movement of the piston rod (2); and
a mounting cavity (111) is provided, in a recessed manner, in the outer wall of the housing, and
the upper suspension and the sealing assembly are arranged in the mounting cavity (111).

2. The air spring assembly according to claim 1, wherein the sealing assembly comprises a sealing diaphragm (41), a sleeve (43), and a pressing block (42) which are sleeved outside the piston rod (2); the upper suspension abuts against the pressing block (42), to cause an outer edge of the sealing diaphragm (41) to be sandwiched between the pressing block (42) and the outer wall of the housing; and the upper suspension makes the sleeve (43) to abut against an outer wall of the piston rod (2), to make an inner edge of the sealing diaphragm (41) to be sandwiched between an inner wall of the sleeve (43) and the outer wall of the piston rod (2).

3. The air spring assembly according to claim 2, wherein the outer wall of the piston rod (2) is provided with a first step surface, and the sleeve (43) is sandwiched between the upper suspension and the first step surface.

4. The air spring assembly according to claim 2, wherein the sealing assembly further comprises an outer casing pipe (44) in interference fit with the mounting cavity (111), and an end of the outer casing pipe (44) abuts against the pressing block (42).

5. The air spring assembly according to claim 2, wherein a first anti-dropping protrusion (411) is protruded from at least one side on the outer edge of the sealing diaphragm (41); and a first positioning hole in inserting connection with the first anti-dropping protrusion (411) is provided in a position of at least one of the pressing block (42) and the outer wall of the housing directly facing the first anti-dropping protrusion (411).

6. The air spring assembly according to claim 2, wherein a second anti-dropping protrusion (412) is protruded from at least one side on the inner edge of the sealing diaphragm (41); and a second positioning hole in inserting connection with the second anti-dropping protrusion (412) is provided in a position of at least one of the sleeve (43) and the outer wall of the piston rod (2) directly facing the second anti-dropping protrusion (412).

7. The air spring assembly according to claim 2, wherein the sealing assembly further comprises:
a limit plate (46), fixedly arranged at an opening of the mounting cavity (111), to limit the upper suspension between the limit plate (46) and the pressing block (42); and
a locking nut (45), threadedly connected with the piston rod (2), the upper suspension being sandwiched between the sleeve (43) and the locking nut (45).

8. The air spring assembly according to claim 2, wherein the piston rod (2) is movable axially, and the sealing diaphragm (41) is a structure that is formed by using an omega-shaped structure as a cross section to rotate 360° around a central axis of the sealing diaphragm (41).

9. The air spring assembly according to claim 2, further comprising at least one of the following characteristics:
a smooth transition connection is achieved between the sealing diaphragm (41) and the pressing block (42); or
a smooth transition connection is achieved between the sealing diaphragm (41) and the sleeve (43).

10. The air spring assembly according to claim 1, wherein the housing comprises a first housing (11) and a second housing (12) in sealing connection with the first housing (11) to form a compression chamber (13), and the mounting cavity (111) is formed, in the recessed manner, in an outer wall of the first housing (11).
